# EUROPÄISCHE PATENTSCHRIFT

(11) **EP 1 076 878 B1**
(45) Veröffentlichungstag und Bekanntmachung des Hinweises auf die Patenterteilung: **24.07.2002**
(21) Anmeldenummer: 99930992.5
(22) Anmeldetag: 03.05.1999
(51) Int. Cl.: G06K 9/00

(54) **VERFAHREN ZUR ERSTELLUNG EINES REFERENZBILDES FÜR MUSTERERKENNUNGSAUFGABEN**
METHOD FOR PRODUCING A REFERENCE IMAGE FOR PATTERN RECOGNITION TASKS
PROCEDE POUR PRODUIRE UNE IMAGE DE REFERENCE DESTINEE A DES TACHES DE RECONNAISSANCE DE FORMES

(30) Priorität: 08.05.1998 AT 78298
(43) Veröffentlichungstag der Anmeldung: 21.02.2001
(73) Patentinhaber: SIEMENS AKTIENGESELLSCHAFT, 80333 München (DE)
(72) Erfinder: HRIBERNIG, Gerd, A-8046 Graz (AT); MARIUS, Wolfgang, A-8043 Graz (AT); HIEROLD, Christofer, D-81739 München (DE); SCHEITER, Thomas, D-82041 Oberhaching (DE)
(74) Vertreter: Berg, Peter
(86) Internationale Anmeldenummer: DE9901303
(87) Internationale Veröffentlichungsnummer: WO9959099

(56) Entgegenhaltungen:
- WO-A-98/02844
- DE-A- 19 600 080
- US-A- 4 933 976
- JAIN A K ET AL: "AN IDENTITY-AUTHENTICATION SYSTEM USING FINGERPRINTS" PROCEEDINGS OF THE IEEE, Bd. 85, Nr. 9, 1. September 1997 (1997-09-01), Seiten 1365-1388, XP000738563 ISSN: 0018-9219

## Beschreibung

Die Erfindung betrifft ein Verfahren zur Erstellung eines Referenzbildes für Mustererkennungsaufgaben.

Mustererkennungsaufgaben gewinnen zusehens an Bedeutung Sie spielen eine Rolle in Zusammenhang mit industriellen Robotern bei hochautomatisierten Fertigungsaufgaben, aber insbesondere bei der maschinellen Identifizierung von Personen. Einsatzmöglichkeiten sind dabei unter anderem Zutrittskontrollen, Geldausgabeautomaten und Kommunikationsgeräte aller Art.

Für die Identifikation geeignete personenbezogene Merkmale sind beispielsweise das Muster der Blutbahnen der Netzhaut, die Struktur der Iris, die Länge und Form der Finger, das Gesicht, die Stimme oder aber Fingerabdrücke. Die Möglichkeiten, Personen aufgrund dieser Merkmale zu identifizieren, sind beispielsweise in IEEE Spectrum, Februar 1994, "It had to be you" beschrieben. Die wahrscheinlich am besten erforschten und damit zuverlässigsten Merkmale sind dabei die Fingerabdrücke. Diese sind auch in für den Benutzer komfortabler Weise zu ermitteln, während z.B. das Muster der Netzhaut nur durch eine für den zu Identifizierenden unangenehme Prozedur erfaßt werden kann und daher nur in jenen Fällen angewendet werden wird, in denen dieser Effekt keine Rolle spielt oder ggf. sogar erwünscht ist.

Wie durch sorgfältige Reihenuntersuchungen und Statistiken nachgewiesen wurde, sind die Fingerabdrücke jedes einzelnen individuell geprägt. Selbst in Fällen von eineiigen Zwillingen sind die Fingerabdrücke nicht identisch, obwohl sie sich ähnlich sehen. Gebildet wird das Muster der Fingerabdrücke durch die sogenannten Papillarlinien oder Ridges, die durch Verzahnung zweier Hautschichten entstehen.

Dabei sind für den Identifikationsvorgang vor allem die sogenannten Minutien, das sind Endpunkte, Verzweigungen, Inseln oder andere singuläre Stellen interessant. Der zu identifizierende Fingerabdruck wird daher daraufhin untersucht, welche Minutien er aufweist, die ermittelten Minutien werden einem Typus zugeordnet und ihre Lage zueinander wird bestimmt.

Die so erhaltenen Minutien beschreiben den Fingerabdruck vollständig. Sie dienen als Grundlage für den Vergleich des zu identifizierenden Fingerabdruckes mit gespeicherten Referenzmustern.

Von der Qualität dieser Referenzmuster hängt die Treffsicherheit des Erkennungsvorganges ganz wesentlich ab.

Ein Teilaspekt der Qualität ist dabei die Größe des Referenzbildes.

Zur Erzeugung eines möglichst großen Referenzbildes ist es aus der US 4 933 976 A bekannt, von einem Finger, während er über eine übliche Prismenanordnung rollt, eine Sequenz sich überlappender Einzelbilder aufzunehmen und diese Einzelbilder anschließend zu einem größeren Gesamtbild zusammenzufügen. Bei diesem Verfahren wird davon ausgegangen, daß die Einzelbilder zueinander lediglich verschoben und nicht verdreht sind.

Nach der WO 98 02844 A ist für allgemeine Bildverarbeitungs-Anwendungen das Zusammensetzen eines mosaikartigen Bildes aus Einzelbildern bekannt.

Der Erfindung liegt die Aufgabe zugunde, ein Verfahren anzugeben, mit dem zu Bildern, aus denen eine symbolische Linieninformation in stabiler und reproduzierbarer Weise gewonnen werden kann, Referenzmuster hoher Qualität erzeugt werden.

Dies geschieht erfindungsgemäß mit einem Verfahren zur Erstellung eines Referenzbildes für Mustererkennungsaufgaben mit folgenden Verfahrensschritten:
- eine Anzahl von sich zumindest teilweise überlappenden Bildern eines zu erkennenden Musters wird erfaßt,
- zu jedem der erfaßten Bilder wird durch Binarisierung und Bestimmung wahrscheinlicher Linien oder Formen eine symbolische Zwischendarstellung erstellt,
- die symbolischen Zwischendarstellungen von zwei Bildern werden miteinander verglichen und die relative Verschiebung und Drehung der Bilder zueinander ermittelt,
- durch Transformation werden die beiden Zwischendarstellungen im überlappenden Bereich zur Deckung gebracht und die Qualität der Übereinstimmung ermittelt,
- wenn eine ausreichende Qualität der Übereinstimmung vorliegt, werden die beiden Zwischendarstellungen zu einem Gesamtbild synthetisiert,
- das Gesamtbild wird mit jeweils einer weiteren Zwischendarstellung verglichen und daraus ein weiteres Gesamtbild erstellt bis schlußendlich ein Gesamtbild vorliegt, welches alle Zwischendarstellungen mit brauchbarem Übereinstimmunggrad umfaßt, und das als Referenzbild dient.

Die Wahrscheinlichkeit, daß die Fläche des Anfragebildes vollständig in der 'virtuellen' Fläche der Referenz enthalten ist, kann so beliebig hoch gemacht werden.

Die Qualität der Merkmale, die sich in mehrfach erfaßten Gebieten des Referenzbildes befinden, werden durch Mittelwertbildung wesentlich erhöht.

Die Erfindung ist besonders vorteilhaft einsetzbar, wenn das zu erkennende Muster einen Fingerabdruck darstellt.

Der Vorgang der Ergänzung und Verbesserung des Referenzbildes kann auch im Zuge der Erkennungsvorgänge weitergeführt werden, indem jeder erkannte Fingerabdruck - jedes erkannte Muster - dem Referenzbild hinzugefügt wird, und so die Qualität der Referenz erhöht wird. Überdies werden dadurch begrenzte Veränderungen wie z.B. geringfügige Verletzungen im Bereich des Fingerabdruckes erfaßt und berücksichtigt.

Die Erfindung wird anhand von Figuren näher erläutert. Es zeigen beispielhaft:
Fig.1 ein Muster eines Fingerabdruckes,
Fig.2 eine grundsätzliche Darstellung des Synthesevorganges,
Fig. 3 eine Darstellung zur Bewertung der Qualität der Übereinstimmung der Zwischendarstellungen und
Fig. 4 eine Darstellung zur Synthese eines Gesamtbildes.

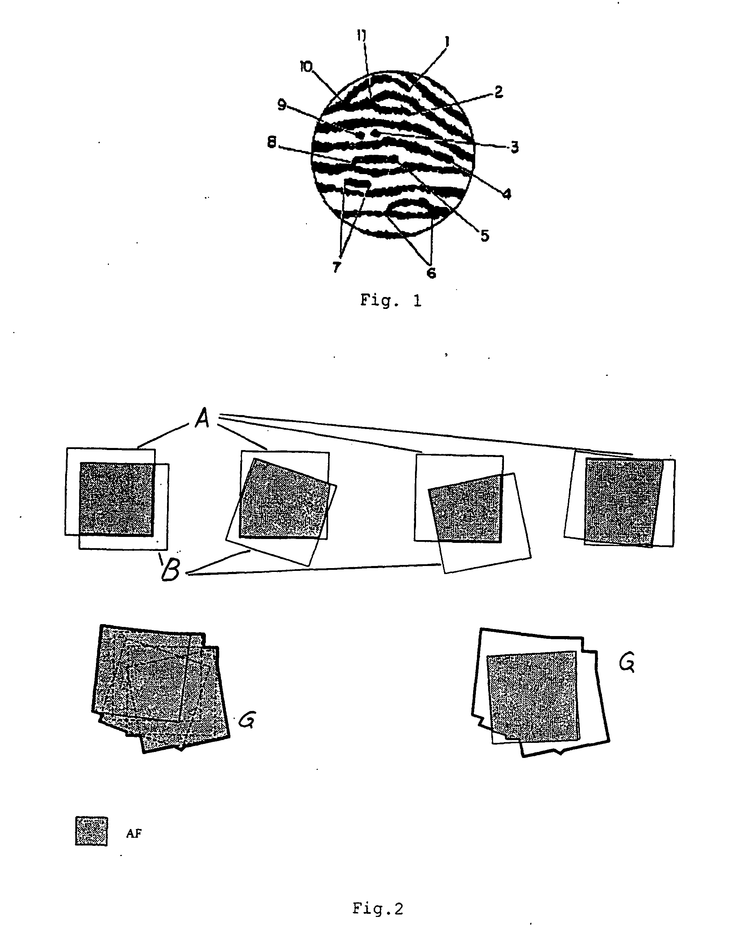

Die dunklen Linien des Bildes nach Fig. 1 entsprechen darin den Fingerlinien oder Papillarlinien, welche mit ihrem Verlauf den Fingerabdruck bestimmen. Zur automatischen Klassifizierung eines Fingerabdruckes wird jedoch nicht das gesamte Muster herangezogen, da bei diesem durch Aufnahmetechnik, Aufnahmedruck und Alterung der betroffenen Person Verzerrungen auftreten können. Grundlage des Erkennungsvorganges sind vielmehr Art und Anzahl der in diesem Abdruck enthaltenen Minutien wie z.B. der Fingerlinienenden 1,2,4,5, der Punkte 3,9, der Inseln 6, der kurzen Linien 7 und der Gabeln 8, 10, 11.

Typus, Lage und Orientierung dieser Minutien sind hingegen gegenüber den genannten Verzerrungen relativ unempfindlich und eignen sich daher für einen automatisierten Erkennungsvorgang.

Bei diesem wird das digitalisierte, d.h. als Grauwertinformation zu einzelnen Bildpunkten vorliegende Bild des Fingerabdruckes in einem ersten Schritt binarisiert, jedem Bildpunkt wird der Wert Schwarz oder weiß zugeordnet

Aus dem Binärbild werden durch Ausdünnung - Linienextraktion - nach einem aus der Literatur bekannten Verfahren (z.B. R.W.Zhou et.al Patt.Rec.Lett. 16(1995)1267-1275) Liniensegmente generiert, die sich durch für die weitere Bearbeitung optimale Eigenschaften auszeichnen. Binarisierung und Linienextraktion werden sowohl für die positiven wie auch für die invertierten Bilddaten vorgenommen, da durch die Untersuchung der invertierten Bilddaten die in den Fingerlinienzwischenräumen enthaltene, unabhängige Information für die Liniensynthese genutzt werden kann.

Das Ergebnis der Linienextraktion sind zwei Sätze von Liniendaten, wovon der eine die Fingerlinien und der andere die Fingerlinienzwischenräume beschreibt. Aufgrund von Bildaufnahmetechnik, Störungen und Besonderheiten der Binarisierung enthalten diese Liniendaten plausible und artifizielle d.h. durch die obgenannten Verfahrensschritte entstandene Liniensegmente, die unterschieden und zu Fingerlinien synthetisiert werden müssen.

Bei der Bestimmung der wahrscheinlichen Fingerlinien aus den Liniensegmenten werden folgende Regeln angewendet:
- lange Fingerlinien sind vertrauenswürdiger als kurze,
- die Vertrauenswürdigkeit einer Fingerlinie wird durch die Anwesenheit paralleler Fingerlinien in einem typischen Abstand oder durch die Anwesenheit von Fingerlinientälern mit halbem Abstand vergrößert,
- kurze Fingerlinien, die rechtwinkelig zu langen Fingerlinien stehen, verlieren an Glaubwürdigkeit,
- Fingerlinien, deren Enden aufeinander zielen, werden miteinander verbunden.

Ergebnis dieser Bestimmung ist eine Liste von Merkmalen (Minutien) und zu jedem Merkmal die Angabe von Typ, Lage, Linienbreite, Orientierung und Qualitätsmaß, welches aus der Anzahl der bei der Bestimmung angewendeten Regeln ermittelt wird.

Die Merkmale werden mittels neuronalem Netz klassifiziert. Dazu wird der Wert der einzelnen Bildpunkte - typisch etwa 176 -, an die Eingänge eines "Feedforward Neural Network" ("Parallel Distibuted Processing", D. Rumelhart u.a., MIT Press 1986) angelegt, wobei für die formale Beschreibung die Bildpunkte zu einem Eingangsvektor I zusammengefaßt werden. Daraus wird mittels neuronalem Netz ein Ausgangsvektor O über eine Zwischenschicht errechnet, wobei der Ausgangsvektor 5 im Ausführungsbeispiel 5 Elemente umfaßt, welche die 5 Grundtypen der Merkmale eines Fingerabdruckes umfaßen. Es sind dies: "weiße Gabel rechts, weiße Gabel links, Ridge (Linie, schwarze Gabel rechts, schwarze Gabel links'.

"Weiße Gabel rechts bzw. links" beschreiben eine Gabelung der Fingerlinienzwischenräume mit Grobangabe der Orientierung. "Schwarze Gabel rechts bzw. links" entsprechen einer Gabelung der Fingerlinie.

Ridge (Linie) beschreibt kein Merkmal, sondern führt aufgrund der damit erhöhten Unterscheidungsmöglichkeiten zwischen einfachen (uninteressanten) Linien und Minutien zu einer erhöhten Erkennungsqualität des Netzes.

Bevor dieses Neuronale Netz zur Klassifikation eingesetzt werden kann, muß es trainiert werden. Dazu wird der "Errorbackpropagation-Algorithmus" ("Parallel Distibuted Processing", D. Rumelhart u.a., MIT Press 1986) verwendet.

Dabei werden Muster mit vorgegebener Klassifizierung dem Neuronalen Netz vorgelegt, welches iterativ den Zusammenhang zwischen Muster und Klassifizierung lernt.

Das so trainierte Neuronale Netz bildet zu jedem angelegten Bildausschnitt einen Ausgangsvektor der die Werte der 5 Ausgangsneuronen umfaßt. Das Verhältnis dieser Werte definiert den Typ und die Qualität des vorgelegten Musters.

Wenn dabei der Wert eines Ausgangsneurons sehr hoch im Vergleich zu den anderen Werten ist, dann liegt ein Ergebnis mit sehr hoher Qualität vor, das entsprechende Merkmal wurde also eindeutig dem Grundtyp zugeordnet, der durch dieses Ausgangsneuron bestimmt ist. Wenn allerdings alle Ausgangsneuronen in etwa den selben Wert aufweisen, dann konnte das neuronale Netz das angelegte Bild keinem Merkmalstyp zuordnen.

Das Ergebnis des Erkennungsvorganges ist weitgehend unabhängig von der Position des Merkmales im betrachteten Bildausschnitt. Diese an sich vorteilhafte Eigenschaft des neuronalen Netzes führt allerdings dazu, daß die Position eines Merkmales nicht ohne weiteres bestimmt werden kann, da das neuronale Netz bei sich überlappenden Bildausschnitten, die zwar dasselbe Merkmal aber an unterschiedlichen Stellen enthalten, zu einem nahezu gleichen Ergebnis kommt.

Zur Ermittlung der exakten Position eines Merkmales werden daher die Ergebnisse zur Beurteilung sich überlappender Bildausschnitte miteinander verglichen und als Ort des Merkmales das Zentrum des Bildausschnittes gewählt, bei dessen Beurteilung das neuronales Netz ein Maximum ergibt.

Die Ermittlung dieses Maximums kann beispielsweise dadurch erfolgen, daß um den betrachteten Bildausschnitt die Ergebnisse des neuronalen Netzes zu umgebenden, überlappenden Bildausschnitten gezählt werden. Ist die Summe der Ergebnisse der Umgebung ein Maximum im Vergleich zu den Summen der Umgebung der Nachbarbildausschnitte, so wird das Zentrum dieses Bildausschnittes als eindeutige Position des Merkmals festgelegt.

Alternativ dazu kann auch die Qualität der Ergebnisse benachbarter, sich überlappender Bildauschnitte zur Ermittlung der exakten Position von Merkmalen herangezogen werden.

Diese Qualitätsergebnisse werden als Skalarfeld betrachtet und ein globales Maximum bestimmt. Der Ort des Maximums wird als Position des Merkmals festgehalten.

Die Ergebnisse des neuronalen Netzes, das sind die bestätigten Minutien werden mit Merkmalslisten bekannter Fingerabdrücke, den sogenannten Kandidaten verglichen.

Dazu werden zwischen den Minutien des zu identifizierenden Fingerabdruckes, im kriminologischen Fachjargon die Spur , und den gleichartigen Minutien im jeweils betrachteten Kandidaten Verbindungsvektoren gebildet. Die Menge dieser Verbindungsvektoren wird daraufhin durch einen Toleranzbereich eingeschränkt, der in gleicher Weise um jede Minutie der Spur gelegt wird: alle Verbindungsvektoren, die nicht innerhalb des zugeordneten Toleranzbereiches auf einer Kandidatenminutie enden, werden ausgeschieden.

Die verbleibenden Verbindungsvektoren werden zur Beurteilung der Übereinstimmung der beiden Abdrücke in einen zweidimensionalen Vektorraum eingetragen, wobei jeder Verbindungsvektor als Punkt mit den Koordinaten Länge und Orientierung dargestellt wird.

Ähnliche Verbindungsvektoren ergeben daher eine Häufung von Punkten an der entsprechenden Stelle dieses Vektorraumes, sie bilden ein sogenanntes Cluster.

Kann nun ein ausgeprägtes Cluster gefunden werden, dann sind Spur und Kandidat als ähnlich anzusehen.

Die Güte der Ähnlichkeit der beiden Fingerabdrücke wird dabei durch die Gesamtheit der Verbindungsvektoren, ihr Verhältnis zur maximal möglichen Zahl, die Zahl der außerhalb des Clusters liegenden Verbindungsvektoren und die Dichte der erfaßten Minutien beschrieben.

So gelten beispielsweise zwei Fingerabdrücke als ähnlich bzw. als mit hoher Wahrscheinlichkeit übereinstimmend, wenn für zumindest 75% der Minutien Verbindungsvektoren existieren und wenn dieselben zu mindestens 80% innerhalb eines vorgegebenen Toleranzbereiches in dem genannten Vektorraum liegen.

Sind hingegen nur für einen geringen Teil der Minutien Verbindungsvektoren ermittelt worden, weil innerhalb der jeweils vorgegebenen Toleranzbereiche keine gleichartigen Minutien des Kandidaten gefunden wurden, dann liegt keine Übereinstimmung vor. Diese Nichtübereinstimmung ist auch dann gegeben, wenn zwar Verbindungsvektoren gefunden werden, diese aber in ihrer Mehrzahl unterschiedliche Längen oder Orientierungen aufweisen und daher im Vektorraum keine Cluster bilden.

Je nach Anwendungsfall wird eine Liste der am besten übereinstimmenden Kandidaten (beispielsweise im kriminaltechnischen Bereich) oder aber - wenn vorhanden - eine einzelne Übereinstimmung (z. B. bei Zutrittskontrollsystemen) ausgegeben.

Als übereinstimmender Fingerabdruck wird dann der Kandidat festgelegt, der das beste Verhältnis von gleichartigen Vektoren zu Minutien aufweist. Dies allerdings nur dann, wenn sich dieser Kandidat in seinem Ergebnis deutlich von den weiteren Kandidaten unterscheidet.

Eine wesentliche Voraussetzung für einen erfolgreichen Erkennungsvorgang ist dabei ein qualitativ hochwertiges Referenzbild (Kandidat).

Dieses Referenzbild wird nach demselben Verfahren gewonnen wie der zu identifizierte Fingerabdruck, es dient weiterhin als Grundlage für eine Merkmalsliste, welche den Fingerabdruck beschreibt.

Das Referenzbild sollte nach Möglichkeit den gesamten Fingerabdruck umfassen und so alle für den Erkennungsvorgang relevanten Merkmale enthalten. Dies ist aber bei der Verwendung handelsüblicher Fingerprintsensoren mit vergleichsweise geringer Sensorfläche dann nicht der Fall, wenn der Finger beim Initialisierungsvorgang nicht exakt mittig auf den Sensor aufgelegt wird. Dadurch wird die effektive Sensorfläche verringert und der Erkennungsvorgang erschwert.

Daher wird bei bekannten Verfahren die auswertbare Fläche eines Referenzbildes ermittelt und, wenn sie einen vorgegebenen Wert unterschreitet, wird das Bild nicht berücksichtigt.

Erfindungsgemäß werden nun mehrere sich teilweise überlappende Bilder B zu einem Referenzbild G zusammengefügt, welches eine größere Fläche als die Sensorfläche umfaßt Daraus ergeben sich folgende Vorteile:

Die Wahrscheinlichkeit, daß die Fläche des Anfragebildes vollständig in der 'virtuellen' Fläche der Referenz enthalten ist, kann so beliebig hoch gemacht werden.

Die Qualität der Merkmale, die sich in mehrfach erfaßten Gebieten des Referenzbildes G befinden, werden durch Mittelwertbildung wesentlich erhöht.

Das Verfahren setzt voraus, daß aus den Bildern eine symbolische Linieninformation K1a, K1b, K2a, K2b, LA, LB in stabiler und reproduzierbarer Weise gewonnen werden kann. Dies ist zum Beispiel der Fall wenn es sich um Abbildungen von Planzeichnungen, Fingerabdrücken oder die Umrisse von Maschinenteilen handelt.

Beim Synthesevorgang zweier sich überlappender Bilder B zu einem neuen Referenzbild G werden zuerst in bekannter Weise - durch Binarisierung und Bestimmung wahrscheinlicher Linien oder Formen symbolische Zwischendarstellungen der Bilder erzeugt.

Danach wird die relative Lageverschiebung und Drehung der Bilder zueinander bestimmt und durch eine entsprechende Transformation eines der Bilder ausgeglichen.

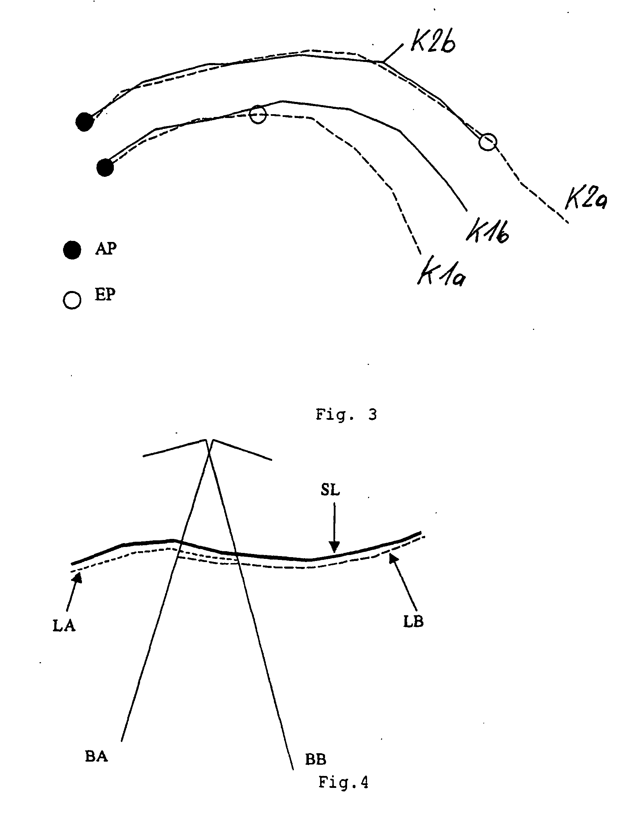

Darauf wird die Qualität der Übereinstimmung der Zwischendarstellungen wie folgt bewertet:
Ausgehend von ausgezeichneten Punkten der gefundenen Linien (Verzweigungs- und Endpunkten) in beiden Darstellungen werden korrespondierende Paare von Punkten gesucht. Korrespondierende Kurven K1a und K1b bzw K2a und K2b, die von diesen Punkten AP ausgehen, werden in beiden Darstellungen in gleicher Schrittweite verfolgt bis eines der folgenden Kriterien erfüllt ist:
   - Die Endpunkte EP beider Kurven werden innerhalb eines Toleranzfensters erreicht
   - Eine von beiden Kurven erreicht den Bildrand
   - Zu einem ersten Punkt einer Linie K1a, K2a kann innerhalb der halben Schrittweite auf der korrespondierenden Kurve K1b, K2b kein Punkt gefunden werden, der näher als eine vordefinierte Schranke vom ersten Punktentfernt ist (Fig. 3).

Die Gesamtlänge der so zur Deckung gebrachten Kurvensegmente K1a und K1b bzw. K2a und K2b wird als Maß für die Übereinstimmung der beiden symbolischen Darstellungen genommen.

Wenn das Maß der Übereinstimmung einen vorgegebenen Wert überschreitet, werden die beiden Darstellungen BA, BB, LA, LB zu einem Gesamtbild SL gefügt, welches in der beschriebenen Weise mit weiteren Zwischendarstellungen verglichen und zu weiteren Gesamtbildern zusammengefügt werden.

Der Vorgang der Ergänzung und Verbesserung des Referenzbildes kann auch im Zuge der Erkennungsvorgänge weitergeführt werden, indem jeder erkannte Fingerabdruck - jedes erkannte Muster - dem Referenzbild hinzugefügt wird, und so die Qualität der Referenz erhöht wird. Überdies werden dadurch begrenzte Veränderungen wie z.B. geringfügige Verletzungen im Bereich des Fingerabdruckes erfaßt und berücksichtigt.

Aus mehreren Bildern B, die nach diesem Kriterium im Referenzbild erkannt wurden, kann eine synthetische Referenz G erzeugt werden, die die Flächenbegrenzung der ursprünglichen Referenz aufhebt.

## Patentansprüche

1. Verfahren zur Erstellung eines Referenzbildes für Mustererkennungsaufgaben mit folgenden Verfahrensschritten:
- eine Anzahl von sich zumindest teilweise überlappenden Bildern (B) eines zu erkennenden Musters wird erfaßt,
- zu jedem der erfaßten Bilder wird durch Binarisierung und Bestimmung wahrscheinlicher Linien oder Formen eine symbolische Zwischendarstellung erstellt,
- die symbolischen Zwischendarstellungen von zwei Bildern (B) werden miteinander verglichen und die relative Verschiebung und Drehung der Bilder zueinander ermittelt,
- durch Transformation werden die beiden Zwischendarstellungen im überlappenden Bereich zur Deckung gebracht und die Qualität der Übereinstimmung ermittelt,
- wenn eine ausreichende Qualität der Übereinstimmung vorliegt, werden die beiden Zwischendarstellungen zu einem Gesamtbild (G) synthetisiert,
- das Gesamtbild wird mit jeweils einer weiteren Zwischendarstellung verglichen und daraus ein weiteres Gesamtbild erstellt bis schlußendlich ein Gesamtbild vorliegt, welches alle Zwischendarstellungen mit brauchbarem Übereinstimmunggrad umfaßt, und das als Referenzbild dient.

2. Verfahren nach Anspruch 1, **dadurch gekennzeichnet, daß** das zu erkennende Muster einen Fingerabdruck darstellt.

3. Verfahren nach Anspruch 1, **dadurch gekennzeichnet, daß** die Erstellung des Referenzbildes zumindest teilweise im Rahmen der Erkennungsvorgänge erfolgt.

## Claims

1. Method for producing a reference image for pattern recognition tasks, comprising the following method steps:
- a number of at least partially overlapping images (B) of a pattern which is to be recognized is recorded,
- a symbolic intermediate representation is produced for each of the recorded images by digitization and definition of probable lines or forms,
- the symbolic intermediate representations of two images (B) are compared with one another, and the relative shift and rotation of the images with respect to one another are determined,
- transformation is used to make the two intermediate representations coincide in the overlapping area and to determine the quality of the match,
- if the quality of the match is adequate, the two intermediate representations are synthesized to form an overall image (G),
- the overall image is compared with in each case one further intermediate representation and a further overall image is produced from this until, in the end, an overall image is obtained which comprises all the intermediate representations with a useable matching level, and which is used as a reference image.

2. Method according to Claim 1, **characterized in that** the pattern to be recognized is a fingerprint.

3. Method according to Claim 1, **characterized in that** the reference image is at least partially produced in the course of the recognition processes.

## Revendications

1. Procédé d'établissement d'une image de référence pour dès tâches de reconnaissance de forme, comprenant les stades de procédé suivants :
- on relève un certain nombre d'images (B) d'un modèle à reconnaître qui se chevauchent au moins en partie,
- pour chacune des images relevées, on établit par binarisation et détermination de lignes ou de formes, une représentation intermédiaire symbolique,
- on compare les représentations intermédiaires symboliques de deux images (B) entre elles, et l'on détermine le décalage et la rotation relative des images l'un par rapport à l'autre,
- par transformation, on met les deux représentations intermédiaires dans la zone de chevauchement en coïncidence, et on détermine la qualité de la coïncidence,
- lorsqu'il y a une qualité de la coïncidence qui est suffisante, on synthétise les deux représentations intermédiaires en une image (G) globale,
- on compare l'image globale à respectivement une autre représentation intermédiaire et on en établit une autre image globale, jusqu'à ce qu'il y ait finalement une image globale qui englobe toutes les représentations intermédiaires, avec un degré de coïncidence qui est utilisable et qui sert d'image de référence.

2. Procédé suivant la revendication 1, **caractérisé en ce que** le modèle à reconnaître est une empreinte digitale.

3. Procédé suivant la revendication 1, **caractérisé en ce que** l'établissement de l'image de référence, se fait au moins en partie dans le cadre des opérations de reconnaissance.
